# EUROPEAN PATENT SPECIFICATION

(11) **EP 0 878 951 B1**
(45) Date of publication and mention of the grant of the patent: **22.08.2001**
(21) Application number: 97107751.6
(22) Date of filing: 13.05.1997
(51) Int. Cl.: H04N 1/00

(54) **Personal computer based image processing system for controlling image processing through a user interface of a scanner**
Personalcomputer basiertes Bildverarbeitungssystem, um die Bildverarbeitung durch eine Benutzerschnittstelle eines Scanners zu kontrollieren
Système de traitement d'images sur un microordinateur pour contrôler le traitement d'images par une interface utilisateur d'un balayeur d'images

(43) Date of publication of application: 18.11.1998
(73) Proprietor: Primax Electronics Ltd, Hsi Chih Town, Taipei Hsien (TW)
(72) Inventor: Wieringa, Fred, Primax Electronics Ltd., Hsi Chih Town, Taipei Hsien, R.O.C. (TW)
(74) Representative: Bauer, Robert, Dipl.-Ing.

(56) References cited:
- EP-A- 0 624 969
- EP-A- 0 635 965

## Description

The present invention relates to an image processing system, and more particularly, to an image processing system which provides a user interface over its scanner for selecting an image processing program to process image signals generated by the scanner.

Personal computer based image processing systems comprise a scanner for scanning documents to generate image signals and a personal computer having a plurality of image processing programs in it for processing the image signals. When using such a system, a user has to initiate a scanner control program first in the computer to control the scanner operations and then scan a document into the computer through the scanner. After an image file has been created by the scanner control program, the user will initiate one or more image processing programs to process the image file one by one. Such process is not very user friendly since a user has to scan and process the document separately. For users who are not familiar with the computer or software, such process is especially awkward since he or she has to directly interact with each software through a complex window interface in order to process the image file generated by the scanner.

Known in the prior art is a computer system interconnected to a copying machine wherein the image processing performed by the copying machine is controlled based on a command generated by the computer system (see e.g. EP-A-0 624 969).

With the aforementioned problems in mind, the present invention aims at providing a personal computer based image processing system as defined in claim 1 which contains a user interface over a scanner to select an image processing program stored in the personal computer to process image signals generated by the scanner automatically.

This is achieved by the present invention as claimed in that the scanner control program of the image processing system automatically displays a selection instruction over the user interface of the scanner about selecting one of the image processing programs stored in the computer and activating the image processing program selected by a user through the user interface to process the image signals.

Further improvements in this respect are obtained by the features specified in the dependent claims.

The invention is illustrated by way of example with reference to the accompanying drawings, in which
Fig.1 is a perspective view of an image processing system according to the present invention,
Fig.2 shows the user interface of the scanner depicted in Fig.1,
Fig.3 is a function block diagram of the image processing system shown in Fig.1, and
Fig.4 is a software architecture diagram of the image processing system shown in Fig.1.

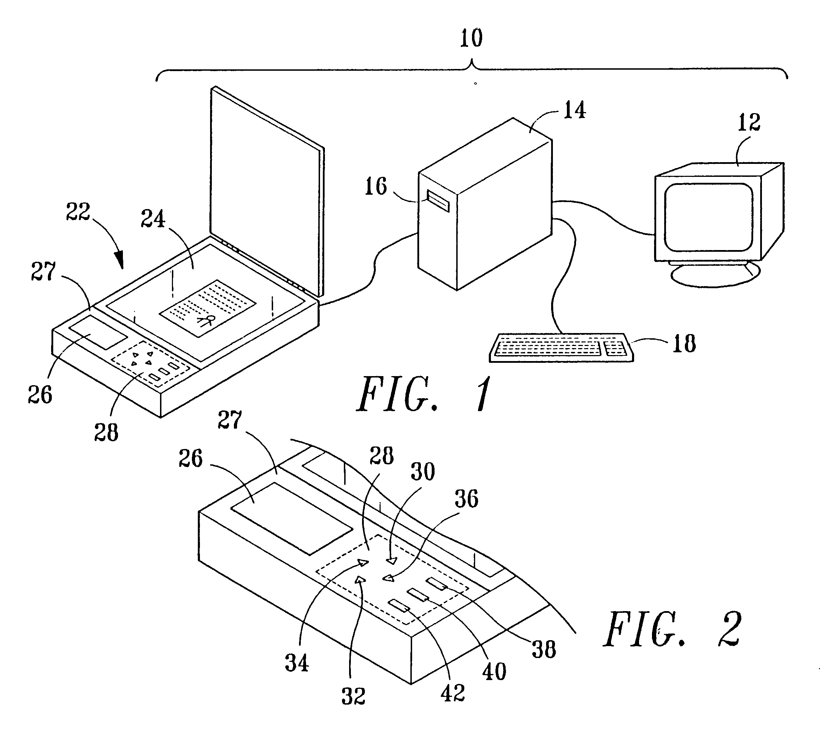

Please refer to Fig.1. Fig.1 is a perspective view of an image processing system 10 according to the present invention. System 10 comprises a personal computer 14 having a floppy disk 16, a monitor 12 for displaying video images generated by the computer 14, a keyboard 18 for inputting data to the computer 14, and a scanner 22 connected to the computer 14 for scanning documents. The scanner 22 comprises a transparent platform 24 for placing a document to be scanned, a user interface 27 which comprises a display device 26 for displaying message signals and a control panel 28 having a plurality of selection keys for receiving user inputs.

Please refer to Fig.2. Fig.2 shows the user interface 27 of the scanner 22 depicted in Fig.1. The display device 26 is an LCD (liquid crystal display) which is used for displaying an operation mode of the scanner 22, and also various scanning instructions or image processing instructions received from the computer 14. The control panel 28 comprises a plurality of selection keys: four direction keys 30, 32, 34, 36, a start key 42, an ESC (escape) key 40, and an enter key 38. A user can select and control an image processing program stored in computer 14 to process the image file of a scanned document by using the selection keys of the control panel 28 according to the instructions displayed over the display device 26.

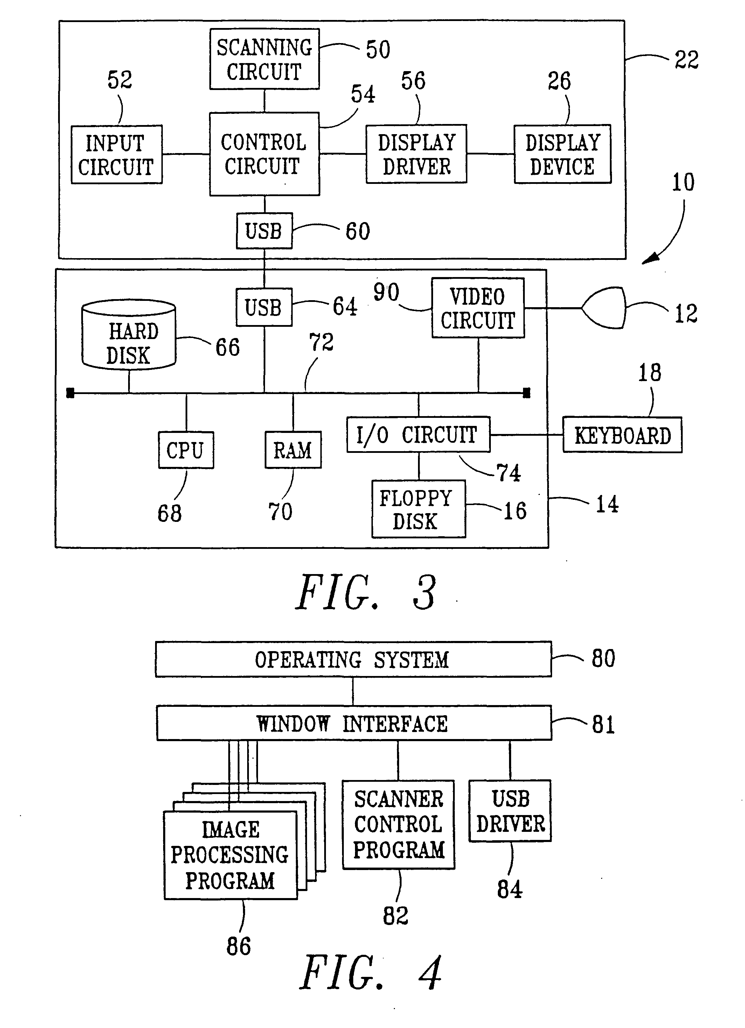

Please refer to Fig.3. Fig.3 is a function block diagram of the image processing system 10 shown in Fig. 1. The system 10 comprises a personal computer 14, a monitor 12, a keyboard 18 and a scanner 22. The computer 14 comprises a hard disk 66 for storing programs and data, a CPU (central processing unit) 68 for executing programs stored in the hard disk 66, a RAM (random access memory) 70 for storing programs and data for the processor 68, an I/O (input-output) circuit 74 for connecting the floppy disk 16 and keyboard 18, a video circuit 90 which is a VGA (video graphic array) board for performing video processing functions and generating video signals for the monitor 12, a USB (universal serial bus) circuit 64 for communicating with another USB circuit 60 of the scanner 22, and an internal bus 72 for connecting internal components of the computer 14 such as the hard disk 66, CPU 68, RAM 70, I/O circuit 74, video circuit 76, USB circuit 64, etc..

The scanner 22 comprises a USB circuit 60, an input circuit 52, a scanning circuit 50, a control circuit 54, a display driver 56 and a display device 26. The input circuit 52 is connected to the selection keys of the control panel 28 shown in Fig.2 and is used for generating selection signals according to user inputs. The scanning circuit 52 which comprises a step-motor and a charge coupled device (not shown) for scanning documents to generate image signals. The control circuit 54 is used for transmitting the image signals generated by the scanning circuit 50 and the selection signals generated by the input circuit 52 to the computer 14, and also for transmitting message signals generated by the computer 14 to the display device 26 through the display driver 56 so that the message signals can be displayed over the display device.

Please refer to Fig.4. Fig.4 is a software architecture diagram of the image processing system 10 shown in Fig.1. All the software programs contained in the software architecture are stored in the hard disk 66 and executed by the CPU 58 of the computer 14. The software architecture comprises an operating system 80 for controlling various operations of the computer 14, a window interface 81 executed under the operating system 80 for supporting all the programs running under it, a USB driver 84 for controlling operations of the USB circuit 64 which passes USB packets between the computer 14 and the scanner 22, a plurality of image processing programs 86 for processing image signals generated by the scanner 22, and a scanner control program 82 for controlling the scanner 22, sending message signals containing various instructions to the display device 26 of the scanner 22 and distributing signals received from the scanner 22.

The image processing programs 86 can be any application program which can process the image signals or data generated by the scanner 22 such as OCR (optical character recognition) software, graphic software, file organizer, facsimile software, etc.. The scanner control program 82 is designed as a platform which comprises a message file (not shown) for storing selection instructions of the image processing programs. One or more message signals can be formed by the scanner control program 82 according to the image file and sent to the display device 26 for assisting a user to select an image processing program 86. The user then enters his/her selection by using the selection keys of the control panel 28 according to the instruction messages displayed over the display device 26. The scanner control program 82 then activates an image processing program according to the selection signals generated by the input circuit 52 and transmits the image signals generated by the scanning circuit 50 to the activated image processing program 86 for further processing.

The scanner control program 84 can also perform a bridge function between the activated image processing program 86 and the scanner 22 so that the activated image processing program 86 can display more instructions or questions over the display device 26 and receive selection signals inputted by the user according to the displayed instructions or questions. When sending an instruction to the user, the activated image processing program 86 transmits one message signal to the display device 26 through the scanner control program 84. The scanner control program 84 then transmits the selection signals generated by the user according to the displayed message signal to the activated image processing program 86.

Through the selection instructions displayed over the display device 26 of the scanner 22, a user can easily select one image processing program 86 to process the image file generated by a document to be scanned. Further instructions can also be provided by the selected image processing program 86 after the program 86 is activated. Such design provides a very simple and direct user interface 27 over the scanner 22 which allows a user to finish his/her image processing job directly by using the display device 26 and the selection keys over the control panel 28.

## Claims

1. An image processing system (10) comprising:
a. a personal computer (14) having a memory (66) for storing programs (80, 81, 82, 84, 86) and a processor for executing the programs (80, 81, 82, 84, 86) stored in the memory (66);
b. a scanner (22) connected to the computer (14) comprising:
a) a scanning circuit (50) for scanning a document to generate image signals, and
b) a control circuit (54) for transmitting the image signals to the computer (14);
c. a plurality of image processing programs (86) stored in the memory (66) for processing the image signals generated by the scanning circuit (50); and
d. a scanner control program (82) stored in the memory (66) for controlling operations of the scanner (22);
**characterized in that:**
said scanner (22) further comprises a user interface (27) containing a display device (26) for displaying message signals generated by the computer (14) and an input circuit (52) having a plurality of selection keys (30, 32, 34, 36, 38, 40, 42) for generating selection signals according to user inputs wherein the control circuit (54) transmits the selection signals generated by the input circuit (52) to the computer (14) and transmits the message signals generated by the computer (14) to the display device (26); and
said scanner control program (82) further:
a. transmits a message signal to the display device (26) through the control circuit (54), said message signal containing one selection instruction about selecting one of the image processing programs (86) to process the image signals generated by the scanning circuit (50), and
b. activates one of the image processing programs (86) to process the image signals according to a selection signal received from the scanner (22) which is generated by a user according to the message signal displayed by the scanner control program (82).

2. The image processing system (10) of claim 1 wherein the activated image processing program (86) further transmits one message signal to the display device (26) and then the scanner control program (82) transmits the selection signals generated by the user according to the displayed message signal to the activated image processing program (86).

3. The image processing system (10) of claim 1 wherein the scanner control program (82) comprises a message file for storing selection instructions of the image processing programs (86) and said message signal containing one selection instruction about selecting one of the image processing programs (86) is formed by the scanner control program (82) according to the image file.

## Patentansprüche

1. Bildbearbeitungssystem (10) mit
a. einem Personal Computer (14) mit einem Speicher (66) zum Speichern von Programmen (80, 81, 82, 84, 86) und einem Prozessor zum Ausführen der in dem Speicher (66) gespeicherten Programme (80, 81, 82, 84, 86),
b. einem mit dem Computer (14) verbundenen Scanner (22), der
a) einen Abtastschaltkreis (50) zum Scannen eines Dokuments und Erzeugen von Bildsignalen sowie
b) einen Steuerschaltkreis (54) zum Übertragen der Bildsignale an den Computer (14) aufweist,
c. einer Mehrzahl in dem Speicher (66) gespeicherter Bildbearbeitungsprogramme (86) zum Bearbeiten der aus dem Abtastschaltkreis (50) stammenden Bildsignale und
d. einem in dem Speicher (66) gespeicherten Scannersteuerprogramm (82) zum Steuern von Operationen des Scanners (22),
**dadurch gekennzeichnet, daß**
der Scanner (22) des weiteren eine Benutzerschnittstelle (27) mit einer Wiedergabeeinrichtung (26) zur Wiedergabe von aus dem Computer (14) stammenden Informationssignalen und einen Eingabeschaltkreis (52) mit einer Mehrzahl von Auswahltasten (30, 32, 34, 36, 38, 40, 42) zum Erzeugen von Auswahlsignalen entsprechend Benutzereingaben enthält, worin der Steuerschaltkreis (54) die Auswahlsignale aus dem Eingabeschaltkreis (52) an den Computer (14) und die Informationssignale aus dem Computer (14) zu der Wiedergabeeinrichtung (26) überträgt, und
das Scannersteuerprogramm (82) des weiteren
a. ein Informationssignal über den Steuerschaltkreis (54) zu der Wiedergabeeinrichtung (26) überträgt, welches eine Auswahlinstruktion bezüglich der Auswahl eines der Bildbearbeitungsprogramme (86) zum Bearbeiten der Bildsignale aus dem Abtastschaltkreis (50) enthält, und
b. eines der Bildbearbeitungsprogramme (86) aktiviert, um die Bildsignale entsprechend einem von dem Scanner (22) erhaltenen Auswahlsignal zu bearbeiten, welches durch einen Benutzer entsprechend dem über das Scannersteuerprogramm (82) wiedergegebenen Informations-signal erzeugt wird.

2. Bildbearbeitungssystem (10) nach Anspruch 1, worin das aktivierte Bildbearbeitungsprogramm (86) des weiteren ein Informationssignal an die Wiedergabeeinrichtung (26) sendet und das Scannersteuerprogramm (82) daraufhin die von dem Benutzer entsprechend dem wiedergegebenen Informationssignal erzeugten Auswahlsignale in das aktivierte Bildbearbeitungsprogramm (86) überträgt.

3. Bildbearbeitungssystem (10) nach Anspruch 1, worin das Scannersteuerprogramm (82) eine Informationsdatei zum Speichern von Auswahlinstruktionen der Bildbearbeitungsprogramme (86) enthält und das eine Auswahlinstruktion bezüglich der Auswahl eines der Bildbearbeitungsprogramme (86) enthaltende Informationssignal von dem Scannersteuerprogramm (82) entsprechend der Bilddatei erzeugt wird.

## Revendications

1. Un système de traitement d'images (10) comprenant :
a. un ordinateur personnel (14) ayant une mémoire (66) pour stocker des programmes (80, 81, 82, 84, 86) et un processeur pour exécuter les programmes (80, 81, 82, 84, 86) stockés dans la mémoire (66) ;
b. un scanner (22) connecté à l'ordinateur (14) comprenant :
a) un circuit de balayage (50) pour scanner un document afin de générer des signaux-images, et
b) un circuit de contrôle (54) pour transmettre les signaux-images vers l'ordinateur (14) ;
c. une pluralité de programmes de traitement d'images (86) stockés dans la mémoire (66) pour traiter les signaux-images générés par le circuit de balayage (50); et
d. un programme de contrôle du scanner (82) stocké dans la mémoire (66) pour contrôler les opérations du scanner (22) ;
caractérisé en ce que :
ledit scanner (22) comprend en outre une interface utilisateur (27) contenant un dispositif d'affichage (26) pour visualiser les signaux de message générés par l'ordinateur (14) et un circuit d'entrée (52) ayant une pluralité de touches de sélection (30, 32, 34, 36, 38, 40, 42) pour générer des signaux de sélection selon les entrées des utilisateurs dans lequel le circuit de contrôle (54) transmet les signaux de sélection générés par le circuit d'entrée (52) vers l'ordinateur (14) et transmet les signaux de message générés par l'ordinateur (14) vers le dispositif d'affichage (26) ; et, en outre, ledit programme de contrôle du scanner (82) :
a. transmet un signal de message vers le dispositif d'affichage (26) par le circuit de contrôle (54), ledit signal de message contenant une instruction de sélection concernant la sélection d'un des programmes de traitement d'images (86) pour traiter les signaux-images générés par le circuit de balayage (50), et
b. active un des programmes de traitement d'images (86) pour traiter les signaux-images selon un signal de sélection reçu du scanner (22) qui est généré par un utilisateur selon le signal de message visualisé par le programme de contrôle du scanner (82).

2. Le système de traitement d'images (10) de la revendication 1 dans lequel le programme activé de traitement d'images (86) transmet en outre un signal de message vers le dispositif d'affichage (26) et ensuite le programme de contrôle du scanner (82) transmet les signaux de sélection générés par l'utilisateur selon le signal de message visualisé vers le programme activé de traitement d'images (86).

3. Le système de traitement d'images (10) de la revendication 1 dans lequel le programme de contrôle du scanner (82) comprend un fichier messages pour stocker les instructions de sélection des programmes de traitement d'images (86) et ledit signal de message contenant une instruction de sélection au sujet de la sélection d'un des programmes de traitement d'images (86) est formée par le programme de contrôle du scanner (82) suivant le fichier images.
